# EUROPEAN PATENT APPLICATION

(11) **EP 4 296 553 A1**
(43) Date of publication of application: **27.12.2023**
(21) Application number: 23180234.9
(22) Date of filing: 20.06.2023
(51) Int. Cl.: F16L 37/00, F16L 37/098, F16L 41/03, F28F 9/02

(54) **COOLING ELEMENT FOR AN ELECTRIC COMPONENT, IN PARTICULAR FOR AN ELECTRIC BATTERY OF AN ELECTRIC OR HYBRID VEHICLE**

(30) Priority: 22.06.2022 IT 202200013153
(71) Applicant: HUTCHINSON S.r.l., 10090 Rivoli (TO) (IT)
(72) Inventor: VIROGLIO, Franco, 10034 CHIVASSO (TO) (IT)
(74) Representative: Torredimare, Luca

(57) **Abstract**

Cooling element (1) for an electric component, in particular an electric battery of an electric or hybrid vehicle, comprising: a pipe (2) for a coolant, having two apertures at two ends (10, 16) of the pipe (2), and at least one secondary aperture (4); at least one external connecting pipe (28) fluidically connected to the at least one secondary aperture (4). The external connecting pipe (28) is connected to the secondary aperture (4) through quick-coupling means.

## Description

### Technical field

The present invention relates to a cooling element for an electric component, in particular for an electric battery of an electric or hybrid vehicle.

### Technical background

In electric vehicles, drive energy is supplied by an electric motor that receives power from one or more electric batteries. Such batteries produce heat when in use, and must therefore be cooled to ensure proper operation. However, the known cooling systems have some drawbacks.

One drawback is due to the fact that the systems known in the art are specifically conceived for individual vehicle models. Therefore, they are costly and take a long time to be produced because a dedicated cooling system needs to be designed for each model of vehicle.

Some known cooling systems include a main pipe having a plurality of holes on its lateral surface, and respective secondary pipes are connected to such holes. The secondary pipes, generally flexible, are fitted onto the main pipe and are held in position by elastic deformation and by respective corrugations to ensure fluid tightness. The cooling fluid flows through such pipes and reaches the component to be cooled. One problem of such systems is that they are expensive to manufacture e require much assembly time.

### Summary of the invention

It is one object of the present invention to provide a cooling element which can solve these and other problems suffered by the prior art, while being simple and economical to manufacture.

It is a further object to provide a cooling element which can be assembled easily and quickly, while being versatile and taking up little space.

According to the present invention, these and other objects are achieved by means of a cooling element incorporating the technical features set out in the appended independent claim.

It is understood that the appended claims are an integral part of the technical teachings provided in the following detailed description of the invention. In particular, the appended dependent claims define some preferred embodiments of the present invention, which include some optional technical features.

### Brief description of the drawings

Further features and advantages of the present invention will become apparent in light of the following detailed description, which is provided herein merely as a non-limiting example with particular reference to the annexed drawings, wherein:
- Fig. 1 is a perspective view of a pipe of a cooling element according to the prior art;
- Fig. 2 is a perspective view of a cooling element according to the prior art;

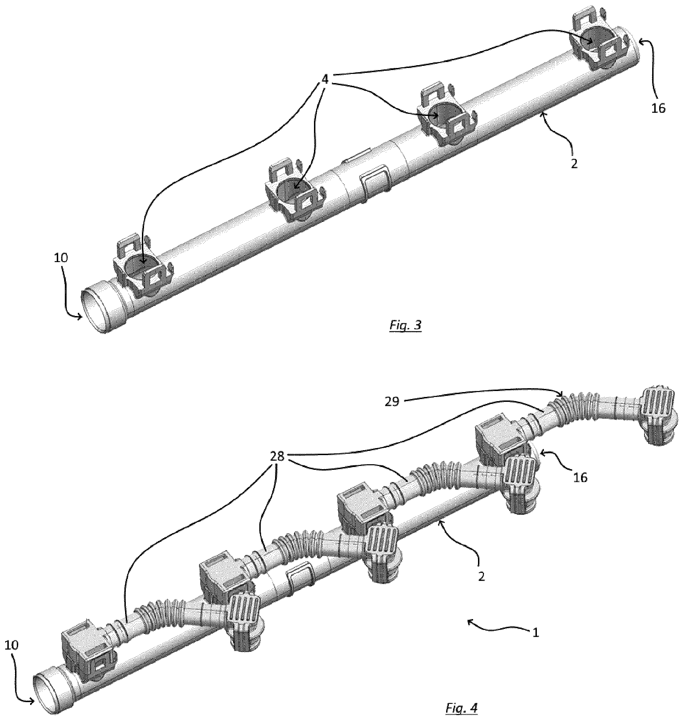

- Fig. 3 is a perspective view of a pipe of a cooling element according to an embodiment of the present invention;
- Fig. 4 is a perspective view of a cooling element according to an embodiment of the present invention;

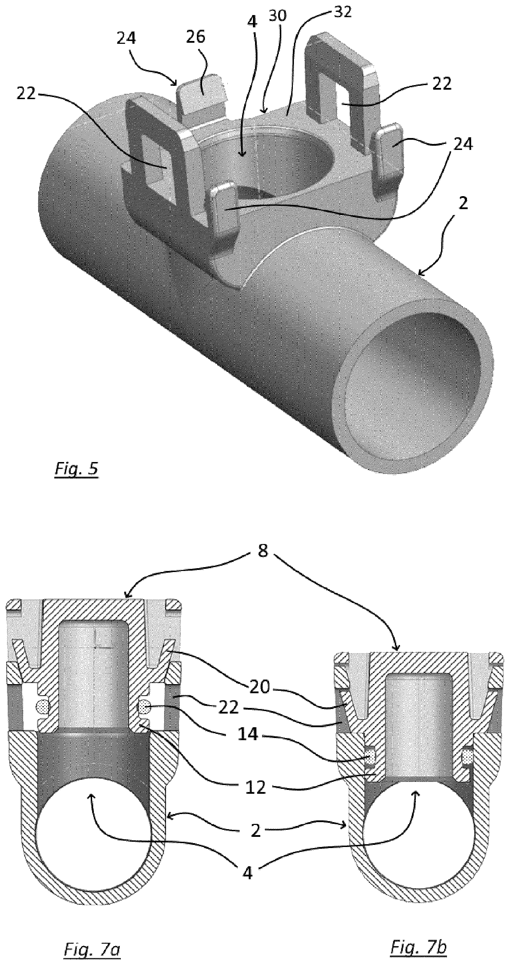

- Fig. 5 shows a section of a pipe of a cooling element according to an embodiment of the present invention;

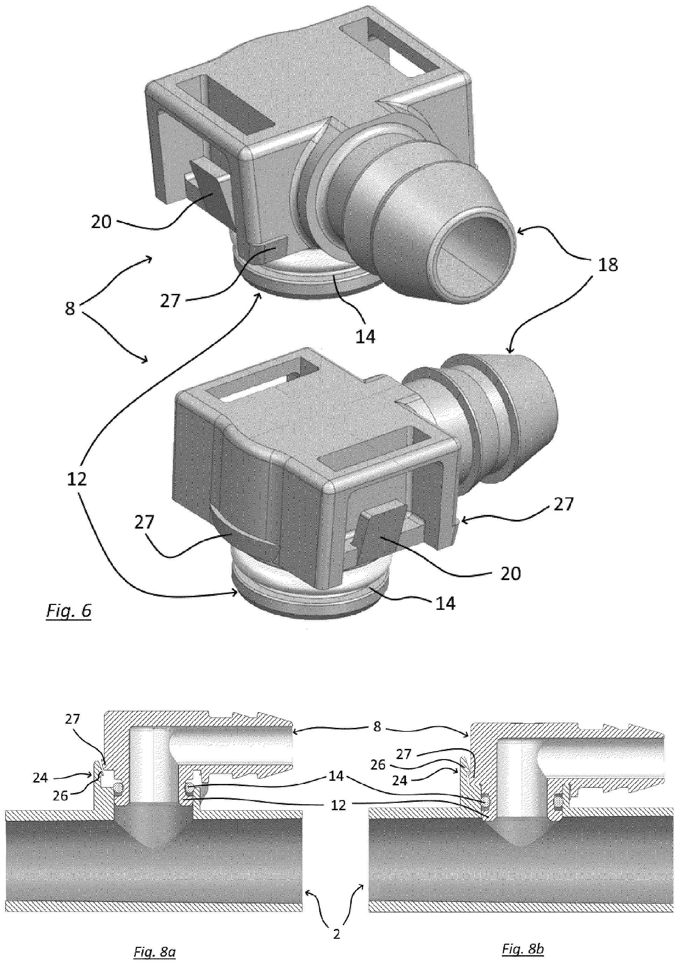

- Fig. 6 is a perspective view of a connector according to an embodiment of the present invention;
- Figs. 7a, 7b are sectional views of an assembly sequence;
- Figs. 8a, 8b are different sectional views of the assembly sequence of Figures 7a, 7b.

### Detailed description of the invention

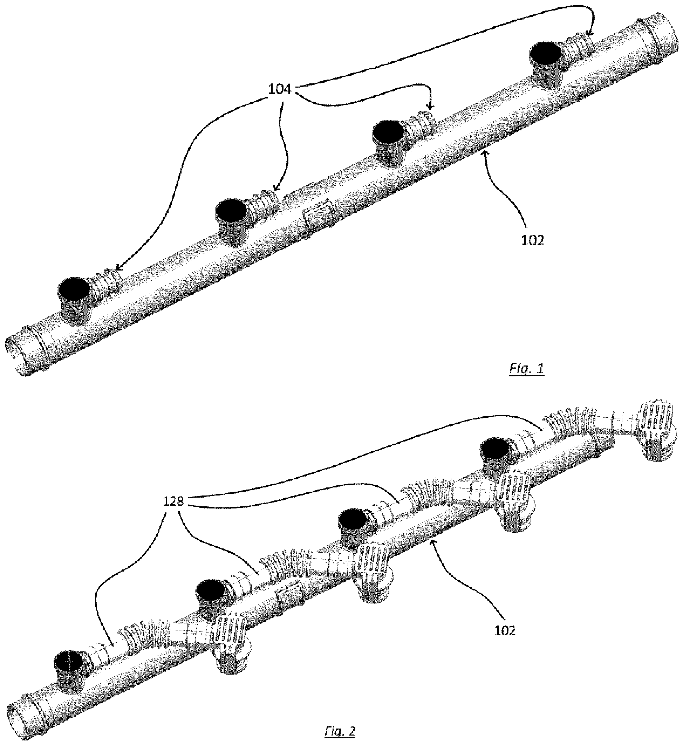

Figs. 1 and 2 show a prior-art cooling system including a main pipe 102 having a plurality of holes 104. Respective secondary pipes 128 are connected to such holes 104. Secondary pipes 128, typically flexible, are fitted onto main pipe 102 and are held in position by elastic deformation and by respective corrugations to ensure fluid tightness. Holes 104 belong to tubular protrusions located on the lateral surface of main pipe 102. The cooling fluid flows through such pipes and reaches the component to be cooled. Secondary pipes 128 engage onto such tubular protrusions. One problem of such systems is that they are bulky and expensive to manufacture, and assembly is time-consuming.

With particular reference to the drawings, the present invention relates to a cooling element 1 for an electric component, in particular for an electric battery of an electric or hybrid vehicle, comprising:
- a pipe 2 for a coolant, having two apertures at two ends 10, 16 of pipe 2, and at least one secondary aperture 4;
- at least one external connecting pipe 28 fluidically connected to the at least one secondary aperture 4.

External connecting pipe 28 is connected to secondary aperture 4 through quick-coupling means.

In particular, the at least one secondary aperture 4 is disposed on a lateral surface of pipe 2.

The quick-coupling means are advantageous in that they allow for quick and easy installation of cooling element 1. In addition, such means make it possible to obtain a connection which does not take up much room. Furthermore, cooling element 1 is not expensive to manufacture.

Rear end 10 and front end 16 are configured to be joined to a front end 16 and, respectively, a rear end 10 of another pipe 2, so as to fluidically connect such pipes 2 to each other. The at least one secondary aperture 4 faces towards the outer part of pipe 2. The coolant is intended to flow from pipe 2 (in particular, a delivery pipe) to external connecting pipe 28 and then reach an external cooling area where the electric component has to be cooled. Afterwards, the heated coolant flows back through another external connecting pipe 28 belonging to another pipe 2 (in particular, a return pipe).

Preferably, pipe 2 is made as one piece. Preferably, pipe 2 is made from polymeric material, conveniently by means of an injection moulding process. As an alternative, pipe 2 is made of metal. Conveniently, also the at least one external connecting pipe 28 is made from polymeric material, e.g. by means of an extrusion process.

Element 1 is compact and versatile because it permits the circulation of a cooling fluid to and from an electric component whose dimensions do not interfere with the size of element 1. The coolant may be a liquid. This is particularly advantageous in an electric or hybrid vehicle, such as, for example, an electric car, having one or more big batteries, which can be effectively cooled while preserving the opportunity of positioning element 1 in the tight spaces of such a vehicle. A further advantage lies in the fact that, by combining a plurality of elements 1, it is possible to provide a modular cooling line that can be easily adapted to different electric components, e.g. different types of electric vehicles. The electric vehicle may be, for example, a fully electric vehicle or a hybrid vehicle. The user can assemble several elements 1 as required to create a modular assembly having a desired length.

The illustrated element 1, in particular pipe 2, has an elongate, preferably straight, shape. Pipe 2 preferably has a circular cross-section.

According to the preferred embodiment, pipe 2 comprises a plurality of secondary apertures 4.

According to the embodiment illustrated herein, element 1 is configured to be removably mounted to an adjacent cooling element 1. Conveniently, front end 16 and rear end 10 are configured to fit to respective rear ends 10 and, respectively, front ends 16 of other cooling elements 1. According to one possible alternative embodiment, element 1 has flanges for establishing a connection between adjacent elements 1, e.g. by means of bolts. Preferably, the ends are provided with seats for sealing means (e.g. a gasket) ensuring the necessary tightness of the connection between adjacent elements 1.

According to one possible, and preferred, embodiment, element 1 is adapted to be welded to another element 1 for connecting such elements 1. This embodiment reduces the transverse size of element 1, because no flange is required. Another advantage of welding is the absence of screws or bolts, resulting in cost reduction. The weld is made between rear end 10 and front end 16 of adjacent elements 1. According to one possible alternative embodiment, the element 1 has flanges configured to be welded to the flanges of adjacent elements 1. Thus, the process to be carried out for producing a cooling line comprising a plurality of modular cooling elements 1 comprises the step of welding rear end 10 of a modular cooling element 1 to a front end 16 of another modular cooling element 1, so as to fluidically connect pipes 2 together. For example, rear end 10 of one element 1 and front end 16 of another element 1 are heated and then pressed together.

In the example illustrated herein, delivery pipe 2 comprises a plurality of external connecting pipes 28 connected to secondary apertures 4. The external connecting pipes 28 can be easily coupled to external pipes (not shown), generally flexible, for transporting the liquid from pipe 2 to the electric component to be cooled, and vice versa. In particular, external connecting pipes 28 may comprise a corrugated portion 29 for increased flexibility. In other words, external connecting pipes 28 may act as connectors for fluidically connecting the pipe to the external pipes. For example, external connecting pipes 28 are first coupled to the external pipes, and then external connecting pipes 28 are coupled to pipes 2.

In particular, all external connecting pipes 28 are disposed in mutual alignment on element 1. Preferably, external connecting pipes 28 have all the same shape and size. The assembly operations are thus simpler, and production costs are reduced.

In the example, the cross-section of pipe 2 is substantially circular.

As aforesaid, pipe 2 comprises a plurality of secondary apertures 4 with which respective external connecting pipes 28 are associated. Conveniently, secondary apertures 4 have all the same shape and size. This results in lower production costs, and the external connecting pipes 28 can be fitted to any secondary aperture 4.

In particular, the quick-coupling means are snap-type or clip-type means. In the preferred example shown herein, the quick-coupling means comprise: a male portion and a female portion adapted to mutually engage to create a fluidic connection between pipe 2 and external connecting pipe 28. In the example, external connecting pipe 28 is coupled to a connector 8 which is configured to connect to secondary aperture 4, thereby allowing a fluid flow. Connector 8 is internally hollow to allow such fluid flow. Connector 8 has a male portion 12 adapted to fit into secondary aperture 4. Secondary aperture 4 has a seat matching the shape of male portion 12. Conveniently, there is a gasket 14, e.g. an O-ring, to ensure tightness between connector 8 and secondary aperture 4. In more detail, gasket 14 is mounted to male portion 12. Therefore, the fluid flows from pipe 2 to external connecting pipe 28 through connector 8 and secondary aperture 4. Connector 8 and external connecting pipe 28 may be two distinct parts, or else they may be made as one piece. Preferably, connector 8 is made from polymeric material, in particular by means of an injection moulding process.

In the example, connector 8 has a connection portion 18 for mating with external connecting pipe 28. In particular, external connecting pipe 28 is mounted radially external to connection portion 18, which has, conveniently, a "fir tree" shape. Preferably, all connectors 8 have the same shape and size.

Preferably, when it is mounted to secondary aperture 4, connector 8 is configured to prevent the rotation of said connector 8 about an axis of insertion of connector 8 into secondary aperture 4. Therefore, when the connector 8 is mounted to pipe 8, it 8 cannot rotate. For example, pipe 2 and connector 8 have abutment portions that prevent such rotation.

Preferably, connector 8 and pipe 2 are so configured that connector 8 can only be fitted into secondary aperture 4 with one or more predefined orientations. It is thus possible, advantageously, to prevent an incorrect assembly of connector 8 and pipe 2. In other terms, pipe 2 and connector 8 are constructed in compliance with a "poka-yoke" system. In more detail, there is only one correct orientation with which connector 8 can be fitted to pipe 2 at secondary aperture 4.

In the example, connector 8 comprises at least one tab 20 adapted to fit into a respective aperture 22 on pipe 2. In particular, there are two tabs 20 and two respective apertures 22. The one or more apertures 22 are located in proximity to secondary aperture 4. As the connector is inserted into secondary aperture 4, tabs 20 become deformed and snap into place as they reach respective apertures 22. Once tab 20 has snapped into aperture 22, removal of connector 8 is impeded. In particular, the two apertures 22 and the two tabs 20 are arranged symmetrically with respect to secondary aperture 4, and particularly also with respect to male portion 12. Generally, pipe 2 comprises at least one tab 20 adapted to fit into a respective aperture 22 on connector 8.

Preferably, pipe 2 comprises further clip-type means in addition to the system made up of aperture 22 and tab 20. In more detail, connector 8 and/or pipe 2 comprise secondary tabs 24 having respective indentations 26 configured to engage with respective indentations provided on pipe 2 or, respectively, on connector 8. Secondary tabs 24 are intended to become elastically deformed to permit mutual engagement between the indentations. In the example, pipe 2 has, near secondary aperture 4, three secondary tabs 24, each one having its own indentation 26. Connector 8 has indentations 27 adapted to engage with indentations 26 of secondary tabs 24.

In the example illustrated herein, the two apertures 22 are symmetrical with respect to secondary aperture 4. Secondary aperture 4 and male portion 12 shown in the drawings are circular in shape.

In particular, on the lateral surface of pipe 2 there are one or more projecting portions 30, and on projecting portion 30 secondary aperture 4 and apertures 22 are formed. In the example, secondary tabs 24 are provided on projecting portion 30. In particular, projecting portion 30 has a flat face 32 in which secondary aperture 4 is formed. In the example, apertures 22 are provided along edges of flat face 32. In more detail, also secondary tabs 24 are provided along edges of flat face 32.

In particular, flat face 32 has four edges. One secondary tab 24 is located on a first edge, two secondary tabs 24 are located on a second edge, opposite to the first one, and each one of the other two edges comprises a respective aperture 22. Therefore, the two tabs 22 are disposed on two opposite edges. In particular, secondary tabs 24 on the second edge are located near the lateral ends of said second edge. In the example, the four edges form a rectangle or a square.

Conveniently, secondary tabs 24 are disposed asymmetrically (in particular, with radial asymmetry) with respect to secondary aperture 4. This advantageously results in connector 8 being engageable with secondary aperture 4 in one way only, preventing the components from being assembled together with a wrong mutual orientation.

The present invention also relates to an electric vehicle, e.g. a car, comprising a cooling system for the electric battery of the same, wherein the cooling system comprises at least one cooling element 1. The electric vehicle may include one or more electric batteries, wherein the cooling system is configured to cool such batteries. The vehicle may be either a fully electric vehicle or a hybrid vehicle.

Of course, without prejudice to the principle of the invention, the embodiments and implementation details described and illustrated herein by way of non-limiting example may be subject to numerous changes without however departing from the scope of the invention as set out in the appended claims.

## Claims

1. Cooling element (1) for an electric component, in particular for an electric battery of an electric or hybrid vehicle, comprising:
- a pipe (2) for a coolant, having two apertures at two ends (10, 16) of the pipe (2), and at least one secondary aperture (4) ;
- at least one external connecting pipe (28) fluidically connected to the at least one secondary aperture (4);
wherein the external connecting pipe (28) is connected to the secondary aperture (4) through quick-coupling means.

2. Element (1) according to claim 1, wherein the quick-coupling means are snap-type or clip-type means.

3. Element (1) according to claim 1 or 2, wherein the external connecting pipe (28) is coupled to a connector (8) configured to connect to the secondary aperture (4), thereby allowing a fluid flow.

4. Element (1) according to claims 2 and 3, wherein the connector (8) comprises at least one tab (20) adapted to fit into a respective aperture (22) on the pipe (2).

5. Element (1) according to claims 2 and 3 or claim 4, wherein the connector (8) and/or the pipe (2) comprise secondary tabs (24) having respective indentations (26) configured to engage with respective indentations (27) provided on the pipe (2) or, respectively, on the connector (8) .

6. Element (1) according to any one of the preceding claims, wherein the pipe (2) comprises a plurality of secondary apertures (4), with which respective external connecting pipes (28) are associated.

7. Element (1) according to claim 6, wherein the secondary apertures (4) have all the same shape and size.

8. Element (1) according to claim 6 or 7, wherein the pipe (2) is made as one piece.

9. Element (1) according to any one of the preceding claims, wherein the pipe (2) is made from polymeric material by means of an injection moulding process.

10. Element (1) according to any one of the preceding claims, wherein the external connecting pipe (28) is coupled to a connector (8) configured to be connected to the secondary aperture (4), thereby allowing a fluid flow; wherein the connector (8), when mounted to the secondary aperture (4), is configured to prevent the rotation of such connector (8) about an axis of insertion of the connector (8) into the secondary aperture (4).

11. Element (1) according to claims 5 and 10, wherein the secondary tabs (24) are disposed asymmetrically with respect to the secondary aperture (4).

12. Element (1) according to any one of the preceding claims, wherein the connector (8) and the pipe (2) are configured to allow the connector (8) to be mounted to the secondary aperture (4) with only one predetermined orientation.

13. Element (1) according to any one of the preceding claims, wherein the external connecting pipes (28) have all the same shape and size.

14. Element (1) according to claims 4, 5, 8, 10, 12, wherein:
- the connector (8) comprises a plurality of said tabs (20) adapted to fit into respective apertures (22) on the pipe (2) ;
- the pipe (2) comprises said secondary tabs (24);
- on the lateral surface of the pipe (2) there are a number of projecting portions (30), and the projecting portion (30) has a flat face (32) in which the secondary aperture (4) is formed; wherein the apertures (22) and the secondary tabs (24) are provided along edges of the flat face (32).

15. Electric or hybrid vehicle comprising a cooling system for its electric battery, wherein the cooling system comprises at least one cooling element (1) according to any one of the preceding claims.
